# EUROPÄISCHE PATENTSCHRIFT

(11) **EP 1 769 155 B1**
(45) Veröffentlichungstag und Bekanntmachung des Hinweises auf die Patenterteilung: **19.03.2008**
(21) Anmeldenummer: 05752597.4
(22) Anmeldetag: 06.06.2005
(51) Int. Cl.: F03B 3/14

(54) **TURBINENLAUFRAD MIT VERMINDERTER LECKAGE VON SERVOÖL**
TURBINE ROTOR DISK WITH REDUCED LEAKAGE OF SERVO OIL
ROUE DE TURBINE A FUITE REDUITE D'HUILE D'ASSERVISSEMENT

(30) Priorität: 29.06.2004 AT 11022004
(43) Veröffentlichungstag der Anmeldung: 04.04.2007
(73) Patentinhaber: VA TECH HYDRO GmbH, 1141 Wien (AT)
(72) Erfinder: HERRMANN, Carsten, Diedrich, 83250 Weingarten (DE)
(74) Vertreter: Schweinzer, Friedrich
(86) Internationale Anmeldenummer: PCT/EP2005/052580
(87) Internationale Veröffentlichungsnummer: WO 2006/000519

(56) Entgegenhaltungen:
- DE-U- 1 772 000
- US-A- 2 636 714
- US-A- 2 794 508
- US-A- 6 042 337
- PATENT ABSTRACTS OF JAPAN Bd. 008, Nr. 197 (M-324), 11. September 1984 (1984-09-11) -& JP 59 087279 A (HITACHI SEISAKUSHO KK), 19. Mai 1984 (1984-05-19)
- PATENT ABSTRACTS OF JAPAN Bd. 004, Nr. 167 (M-042), 19. November 1980 (1980-11-19) & JP 55 114882 A (TOSHIBA CORP), 4. September 1980 (1980-09-04)

## Beschreibung

Die gegenständliche Erfindung betrifft ein Turbinenlaufrad vom Kaplan Typ mit verstellbaren Laufradschaufeln, wobei die Laufradschaufeln durch einen ölbetriebenen, auf einer Kolbenstange innerhalb der Laufradnabe angeordneten Servomotor verstellbar sind. Ein Turbinenlaufrad gemäß des Oberbegriffs des Anspruchs 1 ist aus DE 1 772 000 bekannt. Beim Verwenden ölbetriebener Servomotoren zum Verstellen der Laufradschaufeln kommt es auch zu Leckageverlusten von Servoöl aus dem Servomotor. Aufgrund steigender Umweltauflagen, muss verhindert werden, dass die Leckageverluste von Servoöl in das die Turbine umströmende Medium gelangt.

Der gegenständlichen Erfindung liegt folglich die Aufgabe zugrunde, ein Turbinenlaufrad anzugeben mit dem in einfacher und effektiver Weise verhindert wird, dass Leckage aus dem Servomotor in das die Turbine umströmende Medium austreten kann.

Diese Aufgabe wird erfindungsgemäß dadurch gelöst, dass ein Sammelbehälter vorgesehen ist, in dem das zwischen der Kolbenstange und einer Dichtung des Servomotors austretende Öl aufgefangen wird, der Sammelbehälter um das freie Ende der Kolbenstange angeordnet und starr mit dem Servomotor verbunden ist und mit diesem mitbewegt wird, eine Förderleitung vorgesehen ist und ein Ende dieser Förderleitung in einem zwischen bewegbaren Sammelbehälter und feststehender Kolbenstange gebildeten Pumpraum mündet und dass durch die Stellbewegung des Servomotors der Pumpraum verkleinert und vergrößert wird und somit Öl vom Sammelbehälter in die Förderleitung gefördert wird.

Die Leistung zum Fördern der Leckage aus dem Laufrad wird dadurch vom Servomotor bei der Stellbewegung der Laufradschaufeln aufgebracht, es wird daher kein eigener Antriebsmechanismus für das Leckagefördersystem benötigt. Die für die Regelung der Turbine ohnehin notwendige Bewegung des Servomotors wird damit gleichzeitig auch zum Fördern der Leckage verwendet. Darüber hinaus ist das Leckagefördersystem auch noch konstruktiv sehr einfach aufgebaut und benötigt nur wenige Teile und eine geringe Adaptionen des Laufrades.

Besonders einfach kann ein Rückströme von Leckage in den Sammelbehälter verhindert werden, wenn in der Förderleitung ein Ventil vorgesehen ist.

Eine besonders vorteilhafte Ausgestaltung erhält man mit einem im Turbinenlaufrad angeordneten Zwischenspeicher für gefördertes Öl, in dem die Förderleitung fördert, wobei der Zwischenspeicher vorteilhaft zwischen der Kolbenstange, der Laufradnabe und einer Turbinenwelle, an der das Turbinenlaufrad befestigt ist, angeordnet ist.

Zur einfachen Förderung der Leckage aus dem Zwischenspeicher wird eine zweite Förderleitung, die vorzugsweise in der Turbinenwelle angeordnet ist, vorgesehen, deren ein Ende mit dem Zwischenspeicher verbunden ist.

Ein Rückströmen von Leckage aus dem Zwischenspeicher in den Sammelbehälter lässt sich sehr einfach unterbinden, wenn die Mündung der ersten Förderleitung derart im Zwischenspeicher angeordnet ist, dass das Niveau der Leckage unterhalb der Mündung der ersten Förderleitung liegt.

Die vorliegende Erfindung wird im Nachfolgenden anhand der beispielhaften, nicht einschränkenden Figuren 1 bis 3 beschrieben. Dabei zeigt
Fig. 1 eine Schnittdarstellung eines Ausführungsbeispiel eines erfindungsgemäßen Laufrads,
Fig. 2 eine Detaildarstellung einer ersten Leckageförderstufe und
Fig. 3 eine Detaildarstellung einer zweiten Leckageförderstufe.

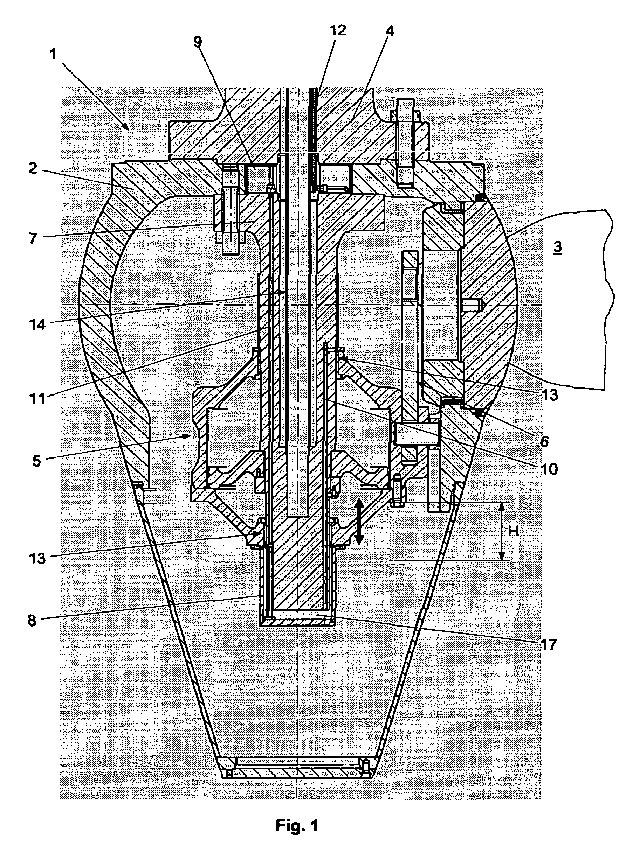

Fig. 1 zeigt ein Laufrad 1 einer Kaplanturbine, bestehend aus einer Laufradnabe 2, die an einer Turbinenwelle 4 befestigt ist. An der Laufradnabe 2 sind eine Anzahl von Laufradschaufeln 3 angeordnet, die über einen hydraulischen Servomotor 5 und einem Betätigungsmechanismus 6 verstellbar sind. Solche Laufräder 1 sind hinlänglich bekannt und es muss nicht näher darauf eingegangen werden.

Der Servomotor 5 ist an einer Kolbenstange 7, die an einem Ende an der Laufradnabe 2 befestigten ist, angeordnet und gleitet auf dieser auf und ab, wie durch den Doppelpfeil in Fig. 1 angedeutet. Dazu wird der Servomotor 5 über Zuleitungen 14 mit unter Druck stehender Hydraulikflüssigkeit, in der Regel Öl, versorgt und so auf der Kolbenstange 7 bewegt. Auch ein solcher Servomotor 5 ist bereits hinlänglich bekannt und es wird darauf verzichtet, diesen näher zu beschreiben.

Zwischen Servomotor 5 und Kolbenstange 7 sind Dichtungen 13 angeordnet, die ein Nachaußendringen von Hydraulikflüssigkeit aus dem Servomotor 5 in den Innenraum der Laufradnabe 2 und weiter aus der Laufradnabe 2 in das die Turbine umströmende Medium verhindern sollen. Allerdings kommt es bei den Dichtungen 13 zwangsweise zu Leckageverlusten, da die Dichtungen 13 nicht absolut dicht ausgeführt werden können und sich durch Verschleiß und äußeren Einflüssen die Dichtungsleistung der Dichtungen 13 ebenfalls verschlechtern kann. Diese Leckageverluste sind aus den oben genannten Gründen aufzufangen und aus der Laufradnabe 2 abzuführen. Dazu wird eine erfindungsgemäße Leckageförderung verwendet, wie im Nachfolgenden anhand der Fig. 1 bis 3 beschrieben.

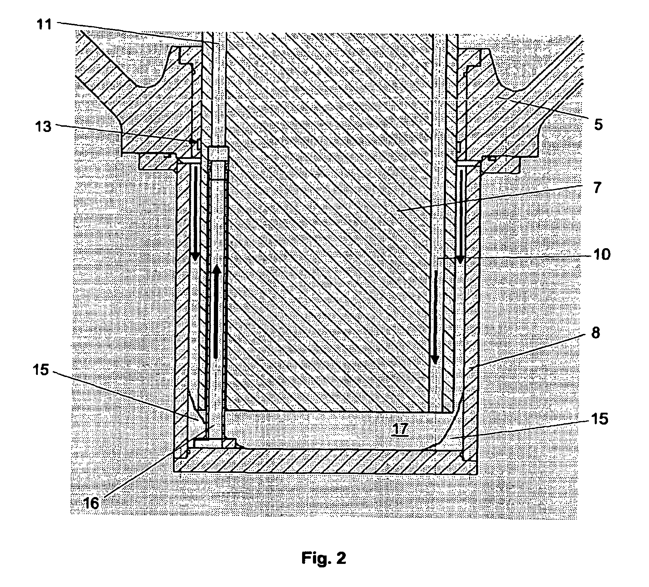

Um das freie Ende der Kolbenstange 7 wird ein nach außen abgeschlossener Sammelbehälter 8 angeordnet, der fest mit dem Servomotor 5 verbunden ist. Der Sammelbehälter 8 wird folglich mit dem Servomotor 5 mitbewegt. Der Sammelbehälter 8 ist dabei so dimensioniert und angeordnet, dass er die Dichtungen 13 auf der Seite des Servomotors 5 die mit dem Sammelbehälter 8 verbunden ist, umschließt. Eventuelle Leckageverluste dieser Dichtung 13 gelangen damit direkt in den Sammelbehälter 8 und werden dort gesammelt, wie durch den Pfeil in Fig. 2 angedeutet. Eventuelle Leckageverluste der Dichtung 13 auf der anderen Seite des Servomotors 5 werden durch eine geeignete Vorrichtung, z.B. ein Ring auf der Kolbenstange 7, aufgefangen und über eine Leitung 10 in den Sammelbehälter 8 geleitet, wie ebenfalls durch einen Pfeil angedeutet. Die Leitung 10 ist hier in der Kolbenstange 7 angeordnet, könnte aber natürlich beliebig anders ausgeführt sein. Damit wird sichergestellt, dass jegliche Leckageverluste von Hydraulikflüssigkeit im Sammelbehälter 8 aufgefangen werden und nicht in den Innenraum der Laufradnabe 2 gelangen können.

Wie in Fig. 2 dargestellt sammelt sich die Leckage 15 durch die Rotation des Laufrades 1 wirkenden Fliehkräfte in den Ecken und Außenwänden des Sammelbehälters 8. Um es von dort wegfördern zu können, ist ein Anschlussstück 16 angeordnet, dessen Mündung im Bereich der Ecke des Sammelbehälters 8 in der sich die Leckage 15 ansammelt angeordnet ist. Dieses Anschlussstück 16 ist mit einer ersten Förderleitung 11 verbunden, mit der die Leckage 15 aus dem Sammelbehälter 8 abgeführt werden kann. Die Förderleitung 11 ist hier in der Kolbenstange 7 angeordnet, könnte aber natürlich auch beliebig anders ausgeführt oder angeordnet werden.

Durch die Stellbewegung des Servomotors 5, wodurch auch der Sammelbehälter 8 mitbewegt wird, kommt es zu einer Veränderung des zwischen der feststehenden Kolbenstange 7 und dem bewegten Sammelbehälter 8 eingeschlossenen Volumens, das hier als Pumpvolumen 17 bezeichnet wird. Der Bewegungsbereich des Servomotors 5 und damit auch des Sammelbehälters 8 ist in Fig. 1 mit H angedeutet. Bei sich verkleinerndem Pumpvolumen wird somit Leckage 15 in das Anschlussstück 16 und weiter in die erste Förderleitung 11 gefördert. Das Anschlussstück 16 ist dabei so ausgeführt, dass es die Bewegung des Sammelbehälters 8 mitmachen kann. Im Beispiel nach Fig. 2 ist das Anschlussstück 16 als Rohr ausgeführt, dass in einer mit der ersten Förderleitung 11 verbundenen Bohrung gleitend angeordnet ist. Selbstverständlich könnte das Anschlussstück 16 auch beliebig anders ausgeführt sein, wie z.B. als Teleskoprohr, als elastischer Schlauch oder als Spiralschlauch.

Durch die erste Förderleitung 11 könnte die Leckage 15 aus der Laufradnabe 2, z.B. zu einem nicht dargestellten Auffangbehälter, weggefördert werden. Um zu verhindern, dass bei einer entgegengesetzten Stellbewegung des Servomotors 5, also bei sich vergrößerndem Pumpvolumen 17, Leckage 15 in den Sammelbehälter 8 zurückgesaugt wird, könnte z.B. in der Förderleitung 11 ein Rückschlagventil vorgesehen sein. Durch ein weiteres Ventil zwischen Pumpvolumen 17 und dem mit Luft gefüllten Innenraum der Laufradnabe 2 könnte durch Druckausgleich z.B. auch verhindert werden, dass im Pumpraum 17 ein zu großer Unterdruck entsteht.

Durch die durch die Stellbewegung des Servomotors 5 bewirkte Pumpbewegung des Sammelbehälters 8 kann damit die Leckage 15 einfach und ohne zusätzliche Antriebseinrichtungen aus dem Sammelbehälter 8 entfernt werden.

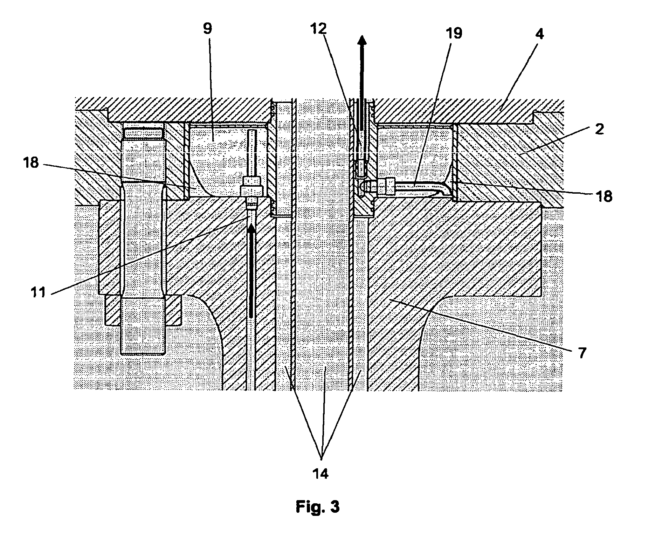

In Fig. 1 und 3 ist eine besonders vorteilhafte Ausgestaltung dargestellt, wie die Leckage 15 aus dem Sammelbehälter 8 und aus der Laufradnabe 2 entfernt werden kann.

Die erste Förderleitung 11 mündet dabei in einem zwischen Turbinenwelle 4, Laufradnabe 2 und Kolbenstange 7 angeordneten Zwischenspeicher 9, in dem sich die aus dem Sammelbehälter 8 geförderte Leckage 18, angedeutet durch den Pfeil, durch die wirkenden Fliehkräfte wieder im Bereich der Ecke und der Seitenwände des Zwischenspeichers 9 ansammelt. Durch ein weiters Anschlussstück 19, das wieder so angeordnet ist, dass es im Bereich der Ecke des Zwischenspeichers 9 mündet, gelangt die Leckage 18 durch die Pumpbewegung des Sammelbehälters 8 in eine zweite Förderleitung 12. Diese zweite Förderleitung 12 leitet die Leckage 18 hier durch die Turbinenwelle 4 aus der Laufradnabe 2 heraus, angedeutet durch den Pfeil, z.B. in einen nicht dargestellten Versorgungsbehälter für Hydraulikflüssigkeit.

Um ein Rücksaugen der Leckage 18 aus dem Zwischenspeicher 9 zu verhindern, ist die erste Förderleitung 11 bis knapp unterhalb der Oberkante des Zwischenspeichers 9 verlängert. Ein Rückfließen von Leckage 18 in die erste Förderleitung 11 wäre folglich nur dann möglich, wenn der Zwischenspeicher 9 fast zu Gänze gefüllt wäre. Die gleiche Wirkung könnte aber wiederum durch ein in der ersten Förderleitung 11 oder der zweiten Förderleitung 12 angeordnetes Rückschlagventil erzielt werden.

Durch das durch die Stellbewegung des Servomotors 5 zeitweise Saugen wird aber auch Leckage 18 aus der zweiten Förderleitung 12 zurück in den Zwischenspeicher 9 gesaugt. Dieser sollte daher zumindest so groß dimensioniert werden, dass er das gesamte Volumen der zweiten Förderleitung 12 aufnehmen kann, da dann durch die Verlängerung der ersten Förderleitung 11 ein Rücksaugen von Leckage 18 aus dem Zwischenspeicher 9 in die erste Förderleitung 11 verhindert werden kann. Aber es könnten natürlich ähnlich wie oben beschrieben auch in der zweiten Förderleitung 12 ein Rückschlagventil vorgesehen sein, um ein Rückfließen von Leckage 18 zu verhindern.

Das Ausführungsbeispiel nach Fig. 1 bis 3 zeigt somit ein mehrstufiges Leckageförderungssystem, dass besonders einfach aufgebaut und trotzdem wirkungsvoll und sicher arbeitet und dass für die Förderung der Leckage die Leistung des ohnehin vorhandenen Servomotors 5 bei der Stellbewegung der Laufradschaufeln 3 nutzt. Allerdings könnte das Leckageförderungssystem wie weiter oben beschrieben auch nur einstufig ausgeführt sein.

In den Fig. 1 bis 3 wird eine vertikal angeordnete Kaplanturbine gezeigt. Das oben beschriebene Leckagefördersystem funktioniert aber gleichermaßen auch bei horizontalen oder schräg angeordneten Kaplanturbinen, wie z.B. bei Rohrturbinen, wobei in diesen Fällen eventuell die Anschlussstücke 16, 19 und/oder die Förderleitungen 11, 12 und/oder der Zwischenspeicher 9 und/oder andere Teile des Leckagefördersystems anders angeordnet sein könnten.

## Patentansprüche

1. Turbinenlaufrad vom Kaplan Typ mit verstellbaren Laufradschaufeln (3), wobei die Laufradschaufeln (3) durch einen hydraulisch betriebenen, auf einer Kolbenstange (7) innerhalb der Laufradnabe (2) angeordneten Servomotor (5) verstellbar sind, **dadurch gekennzeichnet, dass** ein Sammelbehälter (8) vorgesehen ist, in dem die zwischen der Kolbenstange (7) und einer Dichtung (13) des Servomotors (5) austretende Hydraulikflüssigkeit aufgefangen wird, **dass** der Sammelbehälter (8) um das freie Ende der Kolbenstange (7) angeordnet und starr mit dem Servomotor (5) verbunden ist und mit diesem mitbewegt wird, dass eine Förderleitung (11) vorgesehen ist und ein Ende dieser Förderleitung (11) in einem zwischen bewegbaren Sammelbehälter (8) und feststehender Kolbenstange (7) gebildeten Pumpvolumen (17) mündet und dass durch die Stellbewegung des Servomotors (5) das Pumpvolumen (17) verkleinert und vergrößert wird und somit Hydraulikflüssigkeit vom Sammelbehälter (8) in die Förderleitung (11) gefördert wird.

2. Turbinenlaufrad nach Anspruch 1, **dadurch gekennzeichnet, dass** in der Förderleitung (11) ein Ventil vorgesehen ist, mit dem das Rückströmen von Hydraulikflüssigkeit aus der Förderleitung (11) in den Sammelbehälter (8) verhinderbar ist.

3. Turbinenlaufrad nach Anspruch 1 oder 2, **dadurch gekennzeichnet, dass** im Turbinenlaufrad (1) ein Zwischenspeicher (9) für geförderte Hydraulikflüssigkeit vorgesehen ist und die Förderleitung (11) in diesen Zwischenspeicher (9) fördert.

4. Turbinenlaufrad nach Anspruch 3, **dadurch gekennzeichnet, dass** der Zwischenspeicher (9) zwischen der Kolbenstange (7), der Laufradnabe (2) und einer Turbinenwelle (4), an der das Turbinenlaufrad (1) befestigt ist, angeordnet ist.

5. Turbinenlaufrad nach Anspruch 3 oder 4, **dadurch gekennzeichnet, dass** eine zweite Förderleitung (12) vorgesehen ist, und ein Ende der zweiten Förderleitung (12) mit dem Zwischenspeicher (9) verbunden ist.

6. Turbinenlaufrad nach Anspruch 5, **dadurch gekennzeichnet, dass** die zweite Förderleitung (12) in der Turbinenwelle (4) angeordnet ist.

7. Turbinenlaufrad nach einem der Ansprüche 3 bis 6, **dadurch gekennzeichnet, dass** die Mündung der ersten Förderleitung (11) derart im Zwischenspeicher (9) angeordnet ist, dass das Niveau der Leckage (18) unterhalb der Mündung der ersten Förderleitung (11) liegt und damit ein Rückströmen der Hydraulikflüssigkeit aus dem Zwischenspeicher (9) in die erste Förderleitung (11) im Wesentlichen verhindert wird.

## Claims

1. Turbine runner for a Kaplan-type turbine, with adjustable runner blades (3), where the runner blades (3) can be adjusted by means of a servo-motor (5) mounted on a piston rod (7) inside the runner hub (2), **characterised by** a collecting tank (8) being provided in which the hydraulic liquid emerging between the piston rod (7) and a seal (13) of the servo-motor (5) is collected, **by** the collecting tank (8) being arranged around the free end of the piston rod (7) and rigidly connected with the servo-motor (5), moving together with the servo-motor (5), **by** a delivery pipe (11) being provided and the end of this delivery pipe (11) leading into a pump volume (17) formed between the movable collecting tank (8) and the rigid piston rod (7) **and by** the actuating movement of the servo-motor (5) decreasing and increasing the pump volume (17) and thus hydraulic liquid being delivered from the collecting tank (8) into the delivery pipe (11).

2. Turbine runner according to Claim 1, **characterised by** a valve, with which the back-flow of hydraulic liquid from the delivery pipe (11) to the collecting tank (8) can be prevented, being provided in the delivery pipe (11).

3. Turbine runner according to Claim 1 or 2, **characterised by** an intermediate chamber (9) for the hydraulic liquid delivered being provided in the turbine runner (1) and the delivery pipe (11) delivering into this intermediate chamber (9).

4. Turbine runner according to Claim 3, **characterised by** the intermediate chamber (9) being arranged between the piston rod (7), the runner hub (2) and a turbine shaft (4), to which the turbine runner (1) is attached.

5. Turbine runner according to Claim 3 or 4, **characterised by** a second delivery pipe (12) being provided and one end of the second delivery pipe (12) being connected to the intermediate chamber (9).

6. Turbine runner according to Claim 5, **characterised by** the second delivery pipe (12) being arranged in the turbine shaft (4).

7. Turbine runner according to one of Claims 3 to 6, **characterised by** the outlet of the first delivery pipe (11) being arranged such in the intermediate chamber (9) that the level of the leakage (18) lies below the outlet of the first delivery pipe (11) and thus the back-flow of the hydraulic liquid from the intermediate chamber (9) to the first delivery pipe (11) is essentially prevented.

## Revendications

1. Roue motrice d'une turbine Kaplan, avec ailettes (3) ajustables, où les ailettes (3) peuvent être ajustées moyennant un servomoteur (5) monté sur une tige de piston (7) à l'intérieur du moyeu (2) de la roue, **caractérisé en ce qu'**un collecteur (8) est prévu pour capter le liquide hydraulique sortant entre la tige de piston (7) et une garniture d'étanchéité (13) du servomoteur (5), **que** le collecteur (8) est disposé autour du bout libre de la tige de piston (7) et connecté rigidement au servomoteur (5), mouvant ensemble avec le servomoteur (5), **qu**'une conduite de refoulement (11) est prévue et un des bouts de cette conduite de refoulement (11) débite dans un volume de pompage (17) formé entre le collecteur (8) amovible et la tige de piston (7) rigide **et que** la manoeuvre du servomoteur (5) réduit et augmente le volume de pompage (17) et du liquide hydraulique se trouve ainsi refoulé à partir du collecteur (8) à la conduite de refoulement (11).

2. Roue motrice de turbine selon la revendication 1, **caractérisé en ce qu'**une soupape avec laquelle le reflux du liquide hydraulique à partir de la conduite de refoulement (11) vers le collecteur (8) peut être prévenu, est prévue dans la conduite de refoulement (11).

3. Roue motrice de turbine selon la revendication 1 ou 2, **caractérisé en ce qu'**une chambre intermédiaire (9) pour le liquide hydraulique refoulé est prévue dans la Roue motrice de turbine (1) et la conduite de refoulement (11) débite dans cette chambre intermédiaire (9).

4. Roue motrice de turbine selon la revendication 3, **caractérisé en ce que** la chambre intermédiaire (9) est disposée entre la tige de piston (7), le moyeu (2) de la roue et un arbre de turbine (4) où la Roue motrice de turbine (1) est attachée.

5. Roue motrice de turbine selon la revendication 3 ou 4, **caractérisé en ce qu'**une deuxième conduite de refoulement (12) est prévue et qu'un des bouts de la deuxième conduite de refoulement (12) est connecté à la chambre intermédiaire (9).

6. Roue motrice de turbine selon la revendication 5, **caractérisé en ce que** la deuxième conduite de refoulement (12) est disposée dans l'arbre de turbine (4).

7. Roue motrice de turbine selon l'une des revendications 3 à 6, **caractérisé en ce que** la décharge de la première conduite de refoulement (11) est disposée dans la chambre intermédiaire (9) de manière que le niveau de fuite (18) se trouve au-dessous de la décharge de la première conduite de refoulement (11) et de cette manière, le reflux du liquide hydraulique à partir de la chambre intermédiaire (9) vers la première conduite de refoulement (11) soit, dans l'essentiel, prévenu.
